Europäisches Patentamt

European Patent Office

Office européen des brevets

(19)

(11) Veröffentlichungsnummer: **0 154 205**
**B1**

(12) # EUROPÄISCHE PATENTSCHRIFT

(45) Veröffentlichungstag der Patentschrift:
20.04.88

(51) Int. Cl.⁴: **F 02 C 5/12, F 01 D 1/34**

(21) Anmeldenummer: **85101430.8**

(22) Anmeldetag: **11.02.85**

(54) **Explosions-Turbinen-Motor.**

(30) Priorität: **21.02.84 DE 3406187**
**02.02.85 DE 3503563**

(43) Veröffentlichungstag der Anmeldung:
**11.09.85 Patentblatt 85/37**

(45) Bekanntmachung des Hinweises auf die Patenterteilung:
**20.04.88 Patentblatt 88/16**

(84) Benannte Vertragsstaaten:
**AT BE CH DE FR GB IT LI LU NL SE**

(56) Entgegenhaltungen:
**EP - A - 0 085 119**
**DE - A - 2 517 947**
**FR - A - 508 098**
**FR - A - 710 259**
**GB - A - 271 268**
**GB - A - 373 232**
**GB - A - 2 062 118**
**US - A - 4 222 231**

(73) Patentinhaber: **Albrecht, Hans Gerhard,**
**Oberdorfstrasse 5, D-5441 Hirten (DE)**

(72) Erfinder: **Albrecht, Hans Gerhard, Oberdorfstrasse 5,**
**D-5441 Hirten (DE)**

(74) Vertreter: **Hentschel, Peter, Dipl.-Ing.,**
**Hohenzollernstrasse 21, D-5400 Koblenz (DE)**

ACTORUM AG

Beschreibung

Die Erfindung betrifft einen Explosions-Turbinen-Motor zum Antreiben von Fahrzeugen, bei dem auf bzw. an einer Hauptwelle in Achsrichtung hintereinander eine Ladeeinrichtung, eine Ladekammer, eine Brennkammer und ein Drehmoment erzeugender Abgasteil vorgesehen sind, wobei die Brennkammer mit der Ladekammer und dem Abgasteil jeweils mittels einer Drehschiebereinrichtung gesteuert verbindbar ist.

Die bekannten Antriebsmotore für Kraftfahrzeuge sind in der Regel Kolbenmotore, die jedoch einem Grenzwert für den maximal erzielbaren Wirkungsgrad unterliegen, weil die Energie mittels alternierend bewegter Teile (Kolben, Pleuel, Ventile usw.) erzeugt wird. Auch die Lebensdauer, Grösse und Laufruhe solcher Kolben-Verbrennungsmotore ist gering, weil alternierend bewegte Teile Unwuchten bilden und bei der Bewegungsumlenkung dieser Teile hohe Beschleunigungskräfte erzeugt und von den Teilen aufgenommen werden müssen, wobei sich hohe Lagerdrücke ergeben.

Die bekannten Wankelmotoren beseitigen diese Probleme nicht vollständig, denn der anstelle der Kolben vorgesehene Rotor läuft epizyklisch und ist auch nicht kreisrund und zentriert. Es gibt daher auch beim Wankelmotor alternierende Beschleunigungen und Laufunruhe.

Es gibt zwar schon Versuchsfahrzeuge mit Gasturbinen bzw. Verbrennungsturbinen als Antrieb, und es sind auch schon Strahltriebwerke in Kraftfahrzeuge eingebaut worden. Reine Strahltriebwerke scheiden als Antrieb für öffentliche Fahrzeuge aus, weil der heisse Gasstrahl eine Gefahr für die Öffentlichkeit darstellt.

Die wesentlichen Nachteile der Gasturbinen bestehen darin, dass diese mit extrem hohen Drehzahlen arbeiten und daher entsprechend grosse, aufwendige Untersetzungsgetriebe benötigen, um Drehzahlen in Bereichen zu erzeugen, die für den Antrieb von Kraftfahrzeugen geeignet sind. Einer der grössten Nachteile der Gasturbinen dürfte jedoch darin bestehen, dass sie nicht, wie Kolbenmotore, als «Motorbremse» wirken, wenn Bergabfahrten od. dgl. dies erfordern. Trotz Schubabschaltung oder Abschaltung der Brennstoffzufuhr ergibt sich keine Bremswirkung.

Ein Explosions-Turbinen-Motor der eingangs genannten Art ist in der US-A-4 222 231 beschrieben. Bei diesem bekannten Motor ist eine Hauptwelle vorgesehen, auf bzw. an der in Achsrichtung nacheinander eine Schnecken-Ladeeinrichtung, eine Ladekammer, eine Brennkammer und ein Drehmoment erzeugender Abgasteil angeordnet sind, wobei zwischen Ladekammer und Brennkammer sowie zwischen Brennkammer und Abgasteil Drehschiebersteuerungen vorgesehen sind.

Um den Ladedruck bei diesem bekannten Motor konstant zu halten, ist die Ladekammer mit der Schnecken-Ladeeinrichtung über «Reed-Ventile» verbunden. Diese stellen eine druckunabhängig öffnende Einwegverbindung zwischen Schnekken-Ladeeinrichtung und Ladekammer dar. Zur Drehmoment-Erzeugung weist der Abgasteil eine Schnecke auf.

Ausgehend von diesem bekannten Stand der Technik liegt der Erfindung die Aufgabe zugrunde, einen Explosions-Turbinen-Motor der eingangs genannten Art zu schaffen, bei dem die Energie ausschliesslich mittels rotierender Teile erzeugt wird, während zugleich die Nachteile bisheriger, für den Strassenbetrieb geplanter Gasturbinen oder Motore vermieden werden sollen.

Zur Lösung dieser Aufgabe kennzeichnet sich der eingangs genannte Explosions-Turbinen-Motor gemäss Patentanspruch 1 erfindungsgemäss dadurch, dass die auf der Hauptwelle angeordnete Ladeeinrichtung in Form eines Rotations-Saugverdichters ausgebildet ist, dass im Anschluss an die Ladeeinrichtung eine feststehende Ladekammer vorgesehen ist, die eine Drehschieber-Einlasssteuerung umfasst, welche letztere die Luft- bzw. Kraftstoff-Luft-Gemischzufuhr zu einem feststehenden Zylinderkopf mit mehreren Verbrennungsräumen steuert, dass je Verbrennungsraum wenigstens eine Zündkerze und an die Verbrennungsräume axial anschliessend eine feststehende Steuerscheibe mit einer der Anzahl der Verbrennungsräume entsprechenden Anzahl von Gasdurchtrittsöffnungen und daran axial anschliessend als Abgasteil ein rohrförmiges, feststehendes Gehäuse mit darin umlaufendem, mit der Hauptwelle verbundenem Drehkolben, der vier am Aussenrand eines zylindrischen Mantels in Achsrichtung mit Rechtsdrall um 180° verwundene Brennrohre aufweist, axial daran anschliessend in einem ein- oder mehrteiligen Gehäuse einen Abgas-Arbeitsteil mit wenigstens einem Turbinenlaufrad vorgesehen ist, welches als Abgasrotor mit der Hauptwelle verbunden ist, während am Gehäuse ein Abgasaustrittsstutzen vorgesehen ist, dass die Ladeeinrichtung luft- bzw. gemischeintrittsseitig mit einem Membranventil ausgerüstet ist, und dass die Hauptwelle von der Ladekammerwandung dicht umschlossen ist, zwei vom Luft- oder Gemischaustrittsende der Ladeeinrichtung über die Ladekammer bis in den Zylinderkopf diametral zueinander angeordnete, geradlinig verlaufende Gasübertrittsnuten aufweist, die innerhalb der Ladekammer mittels einer Spiralnut der Hauptwelle miteinander verbunden sind, wobei die die Hauptwelle umschliessende Ladekammerwandung eine der Anzahl der Verbrennungsräume entsprechende, zu diesen Verbrennungsräumen durchgehende Einlassöffnungen aufweist, die die Nute der Hauptwelle bei deren Rotation periodisch mit den Verbrennungsräumen verbinden und davon trennen.

Bei dem erfindungsgemäss ausgebildeten Motor übernimmt ein Rotationssaugverdichter, der wie alle anderen Motorteile auf einer gemeinsamen Hauptwelle angeordnet ist, das Ansaugen und Verdichten der Luft, falls es sich um Einspritzmotore handelt, oder das Luft-Kraftstoff-Gemisch aus einem Vergaser, falls es sich um einen Vergasermotor handelt. Wichtiger Vorteil ist, dass sowohl der Vergaser als auch die Einspritzanlage handelsübliche Aggregate für bekannte Kolbenmotoren sein können.

Zwischen der Luft- oder Gemischansaugleitung und dem Rotationssaugverdichter befindet sich ein steuerbares Membranventil, welches nicht nur als Rückschlagventil arbeitet, sondern auch beim Bremsen mit dem Motor mechanisch die Luft- oder Gemischzufuhr zum Ladeverdichter sperrt. Der dadurch entstehende Ausfall des Luft-Gemisch-Stromes verursacht einen Sog und bringt eine Bremswirkung hervor, die als Motorbremse benutzt werden kann.

Dadurch, dass rotierende und feststehende Teile mit Öffnungen, Schlitzen usw. während der Rotation abwechselnd in Deckungslage zueinander und gegeneinander verschoben sein können, werden Gemisch- bzw. Luft- oder Gaswege periodisch geöffnet oder geschlossen, so dass die Funktionen eines Verbrennungsmotors (Ansaugen, Verdichten, Zünden, Ausstossen) verwirklicht werden können. So werden über die Ladekammer die vier oder zwei Verbrennungsräume im Zylinderkopf mit verdichtetem Gemisch oder verdichteter Luft gefüllt, anschliessend abgesperrt und nach Zündung zur Verbrennung gebracht. Bei Einspritzmotoren hat jede Brennkammer neben der Zündkerze noch eine Einspritzdüse.

Sobald der Explosionsvorgang beginnt und sich ein Gasdruck aufbaut, der zur Arbeitsleistung geeignet ist, leiten die Gasdurchtrittsöffnungen der Steuerscheibe, die an den Zylinderkopf angeflanscht ist, die Explosionsgase an die inzwischen in Deckungslage gedrehten Einsaugöffnungen der Brennrohre des Drehkolbens. Infolge der gewundenen oder verdrallten Form der Brennrohre erzeugt der in diese eintretende Explosionsgasstrom infolge Rückstosswirkung ein Drehmoment, das der Hauptwelle mitgeteilt wird.

Das aus den Brennrohren austretende Explosionsgas hat noch längst nicht alle Energie abgegeben. Deshalb ist wenigstens ein Turbinenlaufrad nachgeschaltet, das weitere Energie aus dem Gas entnimmt und als Drehmoment auf die Hauptwelle abgibt.

Die im Gas immer noch vorhandene Energie wird vor dem Austritt noch einmal genutzt, indem ein geeigneter Rotor im Abgasstrom angeordnet wird.

Alle diese Vorgänge sind reine Rotationsvorgänge. Alle Zubehöreinrichtungen, wie Zündeinrichtung, Kühlanlage, Schmieranlage usw., sind handelsübliche Aggregate bekannter Kolbenmotoren.

Alle diese das Drehmoment erzeugenden Vorgänge wirken unwuchtfrei ohne alternierende Bewegungen auf die gemeinsame Hauptwelle. Es wird während der Rotation keine Energie zur Beschleunigung oder Abbremsung irgendwelcher Bauteile verwendet.

Die spiralförmige Nut in der Hauptwelle, die die beiden geradlinigen Nute verbindet, sichert Symmetrie der Ladung der Verbrennungsräume des Zylinderkopfes, wenn z. B. zwei diametral gegenüberliegende Brennräume geladen werden sollen. Lediglich der Vollständigkeit halber sei erwähnt, dass der Motor auch mit nur zwei oder drei Brennkammern bzw. Brennräumen arbeiten kann, und dass die Brennräume auch einzeln nacheinander geladen werden können.

Bei der Weiterbildung nach Anspruch 2 ist das Membranventil steuerbar. Es ist somit z.B. bei Bremsvorgängen in Sperrstellung blockierbar, so dass die Motorbremse optimal wirken kann.

Bei der Weiterbildung nach Patentanspruch 3 dient zur Ansaugverdichtung eine Ladeschnecke, die in einem im Axialschnitt eiförmigen Gehäuse mit den Schneckengängen dichtend an der Innenwand anliegend rotiert. Druckseitig geht die Eiform in eine Zylinderform über, wobei eine Verdickung oder Durchmesservergrösserung des Schneckenkernes bzw. der Hauptwelle im Bereich des zylindrischen Teiles drucksteigernd wirkt, weil das Volumen verkleinert wird.

Alternativ zur Ladeschnecke kann gemäss Patentanspruch 4 auch ein Rotations-Saugverdichter nach Art einer bekannten Abgas-Ladeturbine bei den bekannten Turbo-Kolbenmotoren angewendet werden. Es muss lediglich das Membranventil vorhanden sein, um die Motorbremse verwirlichen zu können, und es muss einen Nebenweg geben, der sich beim Schliessen des Membranventiles für die vom Turboverdichter kommende Luft öffnet.

Bei der Weiterbildung nach Patentanspruch 5 ist ein Schneckenverdichter mit einem Turboverdichter kombiniert; eine Lösung, die gegebenenfalls so hohe Ladedrücke zu erzielen gestattet, dass mit Dieseltreibstoff gearbeitet werden kann.

Zur Optimierung der Ladefunktion dient die Weiterbildung nach Patentanspruch 6, insbesondere ist aber mittels des gegebenenfalls von Hand betätigbaren Schiebers eine zusätzliche Steuerung bzw. Wirkungssteigerung der Motorbremse erzielbar.

Die Weiterbildung nach Patentanspruch 7 dient einer exakten Steuerung des Gasübertrittes und der Vermeidung von Druck- bzw. Gasverlusten nach aussen sowie zwischen den einzelnen Brennräumen; die Aussparungen erlauben eine Umkehrspülung der Brennräume vor der erneuten Ladung.

Die besondere Gestaltung des Drehkolbens nach Patentanspruch 8 dient einerseits einer exakten Abdichtung der einzelnen Brennrohre und Brennräume gegeneinander und andererseits auch gegenüber der äusseren Umgebung und darüber hinaus der Kühlung der Brennrohre. Die Materialwahl ist preiswert und der Antriebsvorgang umweltfreundlich, weil keine Schmierölfilme verbrannt werden. Da auch keramische Werkstoffe gegen Temperaturbelastung nicht unbegrenzt haltbar sind, ist die Auswechselbarkeit von grossem Nutzen. Gegenüber Kolbenmotoren, deren Zylinder mit Kolben in etwa das Äquivalent der Brennrohre des erfindungsgemäss ausgebildeten Motors darstellen, hat das Auswechseln der Brennrohre keine grosse Wirkung auf die anderen Bauteile. Bei einem Kolbenmotor sind Verschleiss von Zylinder und Kolben bzw. der Austausch derselben sehr aufwendige und teure Massnahmen, die fast einer Generalüberholung des Motors gleichkommen.

Die Ausgestaltung des Abgasteiles hängt davon ab, wieviel Energie der Drehkolben aus dem Abgasstrom der Explosionsgase entnimmt. Ist die Energieentnahme gross, so genügt ein einziges Turbinenlaufrad im Abgasteil, dem kurz vor Austritt noch ein Rotor nachgeschaltet ist. Haben die Abgase jedoch noch verwertbare Energie, so empfiehlt es sich, nach Patentanspruch 9 zwei Turbinenräder zu verwenden.

Die Ausgestaltung des letzten Abgasteiles ist nach zwei Alternativen möglich. Bei der Ausführung nach Patentanspruch 10 ist das Gehäuse konisch verjüngt, um dem Abgas einen verengten Ausströmweg zu bieten, und im verengten Teil ist eine dem Gehäuse angepasste Schnecke angeordnet, die die Restenergie in ein Drehmoment umwandelt und in die die gemeinsame Hauptwelle einspeist. Es handelt sich bei dieser Lösung um die Ausführung in kompakter, kleinvolumiger Bauweise.

Die andere Lösung bietet die Weiterbildung nach Patentanspruch 11, bei der ein Abgas-Turbinenrad mit grossem Durchmesser und mit konischem Kern zur Einengung des Querschnittes der Verbrennungsgase vorgesehen ist, um die Restenergie der Abgabse in ein Drehmoment umzuwandeln.

Zur Steigerung der Abbremswirkung kann gemäss Patentanspruch 12 auf der Hauptwelle eine Strombremse angeordnet sein, die nach der Strombremse von Schienenfahrzeugen wirkt. Regelbare Wirbelstrombremsen, die für solche Zwecke in Frage kommen, können mit Hilfe der ausgereiften Thyristor- bzw. Halbleitertechnik zur Energierückgewinnung bzw. Einspeisung generatorisch erzeugter Energie in Batterien verwendet werden, so dass auch die Bremsung mit geringen Energieverlusten durchführbar wird.

Ausführungsbeispiele des erfindungsgemäss ausgebildeten Explosions-Turbinen-Motors sind in den Zeichnungen dargestellt. Es zeigt:

Fig. 1 einen Schemaaxialschnitt durch den Saugkompressor der Ladeeinrichtung bei Ausbildung als Ladeschnecke;

Fig. 2 einen Axialschemaschnitt durch die Ladekammer und den Zylinderkopf;

Fig. 3 eine Axial-Schemaschnittansicht und einen Schnitt längs der Linie A–B des Schnittes, der die Ladekammer und den Zylinderkopf ohne Hauptwelle wiedergibt;

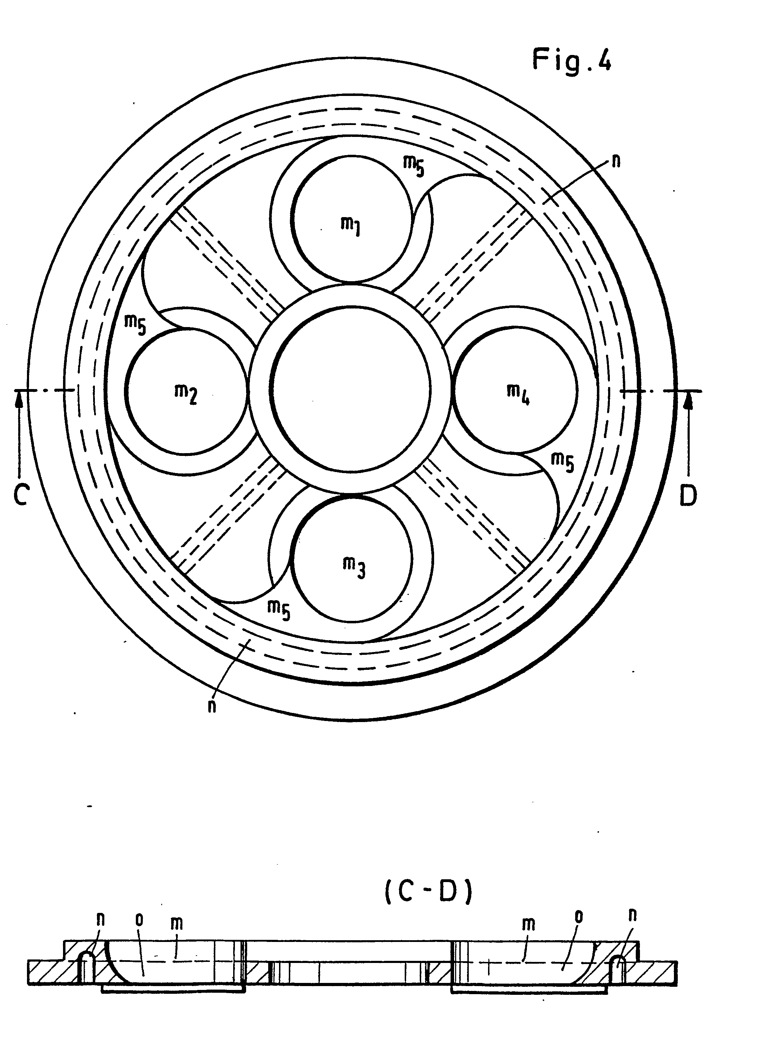

Fig. 4 eine Draufsicht auf eine Axialschnittansicht der Steuerscheibe;

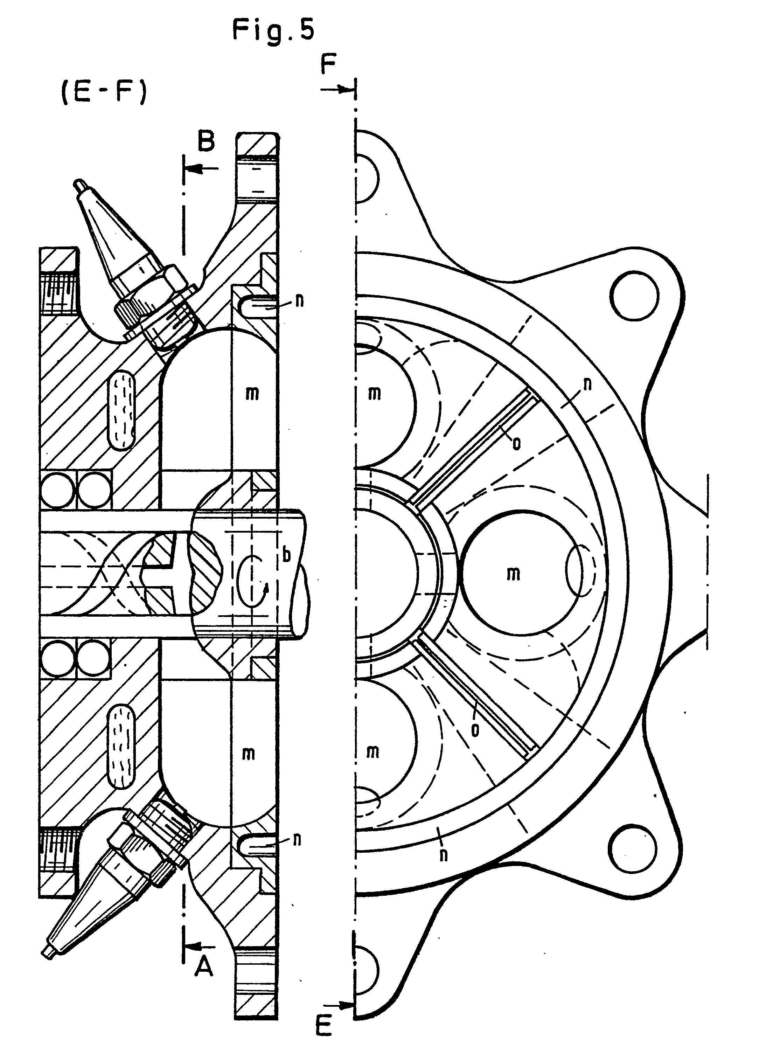

Fig. 5 eine Axialschnittansicht des Zylinderkopfes mit Hauptwelle und Steuerscheibe und eine Unteransicht dieser Teile;

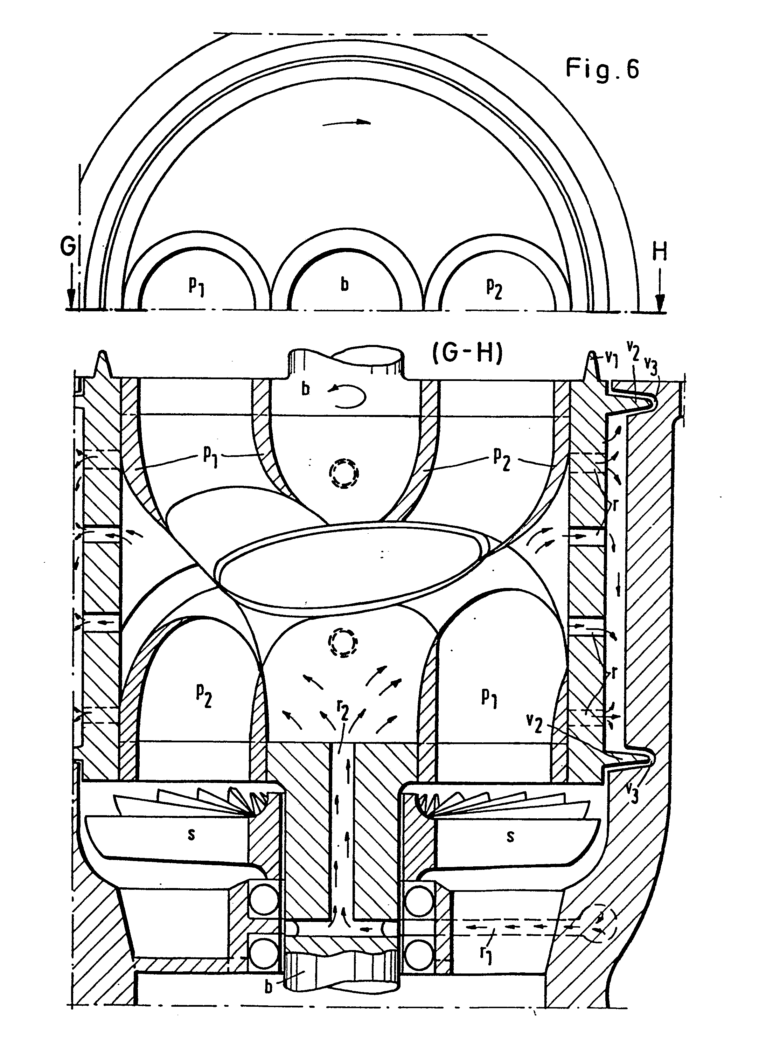

Fig. 6 eine Teildraufsicht und eine Axialschnittansicht des Drehkolbens mit anschliessendem Abgasteil;

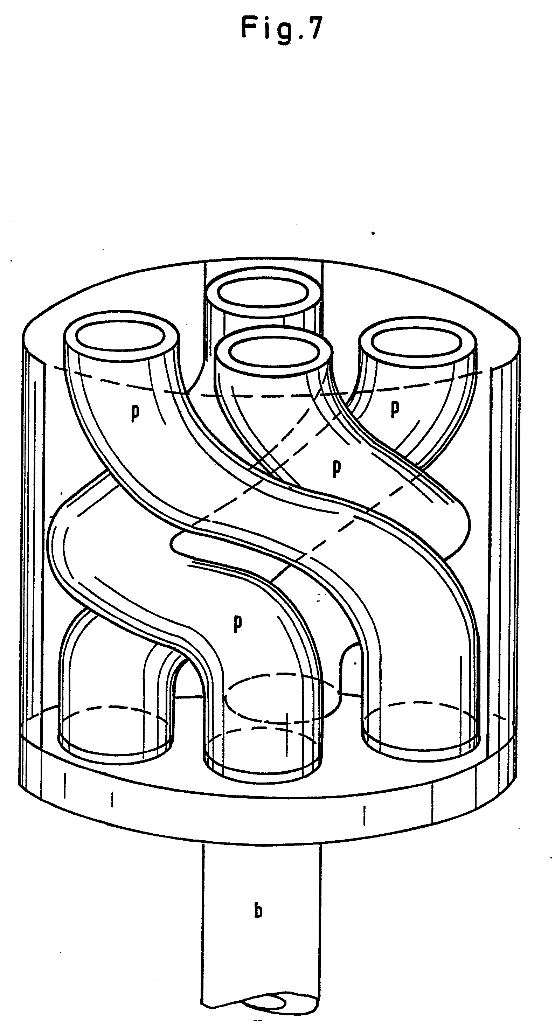

Fig. 7 eine teils geschnittene perspektivische Ansicht des Drehkolbens;

Fig. 8 eine auseinandergerückte Axialschnittsicht einer Ausführungsform des Explosions-Turbinen-Motors, und

Fig. 9 eine der Fig. 8 entsprechende Darstellung einer weiteren Ausführungsform des Explosions-Turbinen-Motors.

Wie die Figuren zeigen, besteht der Explosions-Turbinen-Motor aus Teilen, die auf einer gemeinsamen Hauptwelle b angeordnet sind und mit dieser rotieren, wobei sie entweder antreibend wirken oder getrieben werden und aus einem in Achsrichtung mehrteiligen Gehäuse, welches in bezug auf die Hauptwelle feststeht und so die diversen Steuerfunktionen im Zusammenwirken mit der rotierenden Welle b ermöglicht.

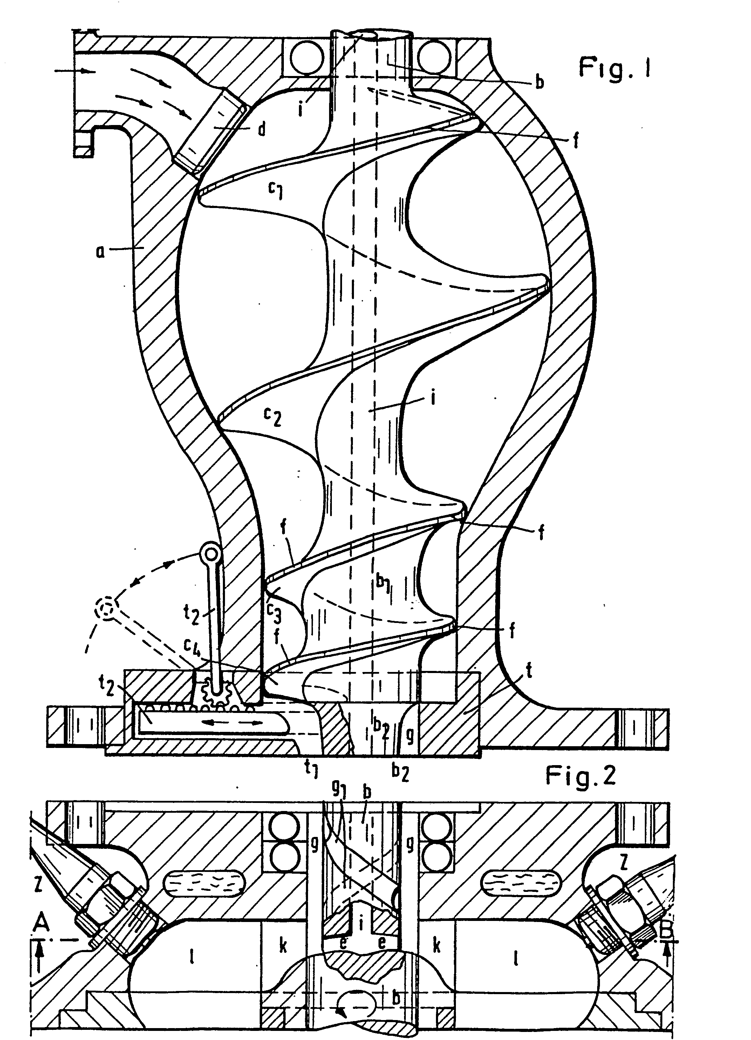

In Funktionsrichtung gesehen ist der erste Teil eine Ladeeinrichtung A oder AT. Die Ladeeinrichtung arbeitet als Rotations-Ladeverdichter. Gemäss Fig. 1 besteht sie aus einem im Querschnitt eiförmigen Gehäuse a, das druckseitig in einen zylindrischen Endteil übergeht, sowie aus einer auf der Hauptwelle b montierten Schnecke c mit Schneckengängen c1 bis c4, deren Steigung in Druckrichtung abnimmt und deren Durchmesser jeweils so gewählt ist, dass die Aussenkanten mittels einer Dichtung f an der Innenseite des Gehäuses a gleiten können.

Saugseitig ist ein steuerbares Membranventil d vorgesehen, das z. B. mit einem nicht gezeigten handelsüblichen Vergaser in Verbindung steht. Am Druckende der Schnecke c ist der Kern oder Innendurchmesser der Hauptwelle b vergrössert, um eine Drucksteigerung durch Volumenverkleinerung zu erzielen.

An die Ladeeinrichtung schliesst sich eine bis in den Zylinderkopf C reichende Ladekammer B an. Wesentlicher Bestandteil der Ladekammer ist ein Sperring t, der die Ladeeinrichtung gegen den Zylinderkopf C abdichtet, jedoch zugleich den Gemischübertritt in den Zylinderkopf C steuert. Innerhalb des Sperringes t hat die Hauptwelle b zwei Längsnute g, wobei der Sperring t zusätzlich einen Durchtrittskanal t1 aufweist, dessen Querschnitt von einem von aussen betätigbaren Sperroder Drehschieber verengt oder vergrössert werden kann.

Im Anschluss an den Teil der Ladekammer B, der noch innerhalb der Ladeeinrichtung A bzw. des Sperringes t liegt, ist die rotierende Hauptwelle allseitig vom Gehäuse umgeben. In diesem Bereich trägt die Hauptwelle b noch eine Spiralnut g1, die die beiden Längsnute g verbindet.

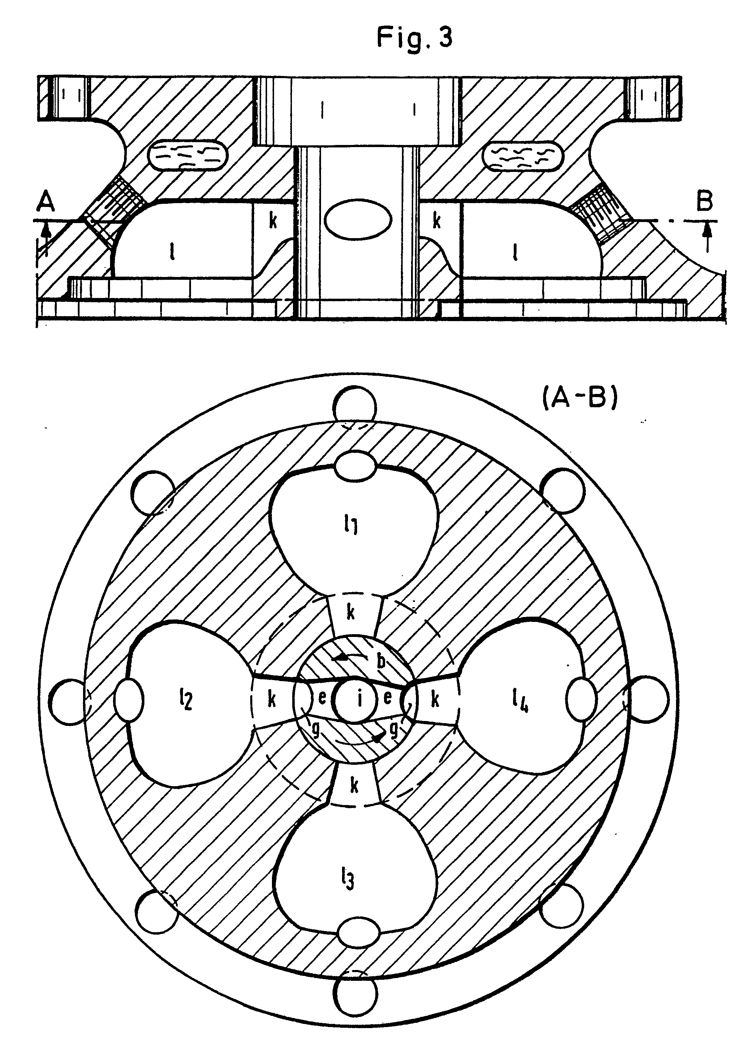

Am Ende der Nute g befinden sich, als Bestandteil des Zylinderkopfes C, vier Einlassöffnungen k, die in drei oder vier Brennkammern oder Brennräumen l1 bis l4 münden, wobei der innerhalb dieses Bereiches rotierende Abschnitt der Hauptwelle b als Drehschieber fungiert und je nach Drehstellung relativ zu den Eintrittsöffnungen k verdichtetes Gemisch in eine Brennkammer leitet oder den Austritt verdichteten Gemisches sperrt. Die gezeigte Anzahl der Nute, Durchtritts- oder Einlassöffnungen k und der Brennräume ist, abweichend von der Figur, variierbar. Gemäss Fig. 3 werden immer zwei diagonal zueinander stehende Brennkammern 1 zugleich geladen; es kann aber auch, insbesondere bei ungeradzahliger Brennraumzahl, einzeln nacheinander geladen werden. Es müssen nur die Nute g und die Eintrittsöffnungen k sowie die Brennräume l entsprechend angeordnet werden.

Bei der Ausführung nach Fig. 1 hat die Hauptwelle b eine am Ende offene Zentralbohrung i, die bis in die Ladekammer B bzw. bis zur Höhe der Eintrittsöffnung k reicht und dort über Querkanäle in die Nute g mündet. Diese Zentralbohrung dient dazu, z. B. eine Abgasladeturbine druckseitig anzuschliessen, um den Ladedruck zu erhöhen. So können u. U. Ladedrücke erzielt werden, die die Verwendung von Dieselkraftstoff gestatten.

Für den normalen Betrieb mit Benzin ist jeder Brennraum l1 bis l4 des Zylinderkopfes C mit einer Zündkerze ausgerüstet. Sollte jedoch mit Kraftstoffeinspritzung gearbeitet werden, so ist jedem Brennraum auch noch eine Einspritzdüse für Kraftstoff zuzuordnen, was in der Figur nicht gezeigt ist, weil dieses Vorgehen von den Kolbenmotoren her bekannt ist.

Die Zündung der Zündkerzen z erfolgt mit Hilfe einer von Kolbenmotoren her bekannten Zündanlage und ist daher in den Figuren nicht einzeln dargestellt.

Wird das entweder schon angesaugte und verdichtete oder durch Einspritzung in verdichtete Luft erzeugte Gemisch gezündet, baut sich in den Brennräumen ein Explosionsdruck auf.

Eine an den Zylinderkopf C angeschlossene Steuerscheibe D leitet die Verbrennungsgase in einen axial anschliessenden, auf der Hauptwelle b befestigten Drehkolben E weiter. Auch beim Zusammenwirken der feststehenden Steuerscheibe D mit dem rotierenden Drehkolben E findet wieder die schon beschriebene Drehschiebersteuerung statt. Es müssen jedoch besondere Massnahmen für die Abdichtung ergriffen werden, weil die Brenndrücke hoch sind. Die Drehschieberfunktion ergibt sich dadurch, dass der Drehkolben (im Beispiel vier) Brennrohre p1 bis p4 aufweist, die am Aussenumfang eines Zylindermantels in Rechtsdrallrichtung um 180° verdreht angeordnet sind, mit ihren oberen offenen Enden während der Rotation unter die Öffnungen der Steuerscheibe treten und den Gasdruck aufnehmen können. Zwecks Abdichtung hat die Steuerscheibe auf ihrer Unterseite, die dem Drehkolben E zugewandt ist, eine äussere kreisringförmig verlaufende Nut n, die in die Rippe v1 des rotierenden Drehkolbens E eingreifen und Abdichtung bewirken.

Die Steuerscheibe D hat ausserdem Gasübertrittsöffnungen m entsprechend der Lage der Brennräume l1 bis l4. Zusätzlich sind zwischen den Gasübertrittsöffnungen m radial verlaufende Dichtungen o vorgesehen, um einen Gasübertritt zwischen den Öffnungen m zu verhindern. Zur Steigerung des Wirkungsgrades durch Gasumkehrspülung beim Laden ist die Steuerscheibe D zylinderkopfseitig mit gegen Drehrichtung verlaufenden, von den Gasdurchtrittsöffnungen ausgehenden, nasenförmigen Aussparungen m5 an ihrer Oberfläche versehen.

Der Drehkolben E, der mit radialem Abstand in einem Gehäuse umläuft, ist mittels zweier in axialem Abstand angeordneter, in Nute v3 des Gehäuses eingreifender Rippen v2 zusätzlich in Achsrichtung abgedichtet. Die beispielsweise aus temperaturbeständigem keramischen Werkstoff bestehenden Brennrohre p1 bis p4 nehmen die Brenngase auf und wandeln deren Energie infolge des Rechtsdralles im Sinne eines Rückstosseffektes in ein Drehmoment um, das der Hauptwelle b mitgeteilt wird.

Zur Kühlung ist das Abtriebsende der Hauptwelle b mit einer Zentralbohrung r2 versehen, welche mit einer Druckquelle für ein flüssiges Kühlmedium in Verbindung steht. Das Kühlmedium tritt aus der Hauptwelle b in den hohlen Innenraum des Drehkolbens E ein, wird nach Umspülung der Aussenseiten der Brennrohre p1 bis p4 nach aussen geschleudert, und zwar unter Fliehkraftwirkung, und tritt durch Löcher r im Mantel des Drehkolbens aus. Eine im einzelnen nicht gezeigte Ableitung nimmt das Kühlmedium auf und führt es, z. B. nach Passieren eines Kühlers, dem Kühlkreislauf wieder zu.

Im Drehkolben kann nur die erste grosse Verpuffungsenergie genutzt werden. Deshalb schliesst sich an den Drehkolben E ein Abgasteil F oder FT an.

Kennzeichen desselben ist ein mehrteiliges Gehäuse, in dessen Innerem auf der Hauptwelle b befestigte Rotoren s rotieren.

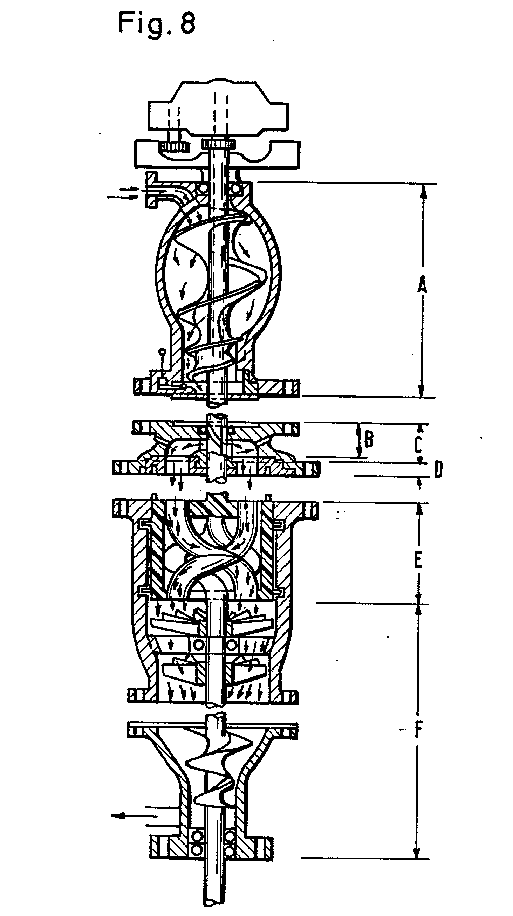

Im Anschluss an das Austrittsende des Drehkolbens E befindet sich auf der Hauptwelle wenigstens ein Turbinenrad s; gemäss Fig. 8 ist in axialem Abstand, in welchem sich ein feststehender Schaufelstator befindet, ein weiteres Turbinenlaufrad angeordnet. In einem weiteren, sich verjüngenden Gehäuseabschnitt, befindet sich eine entsprechend in Ausgangsrichtung des Brenngases verjüngte Schnecke, die die Restenergie der Verbrennungsgase ausnutzt und der Hauptwelle als Drehmoment zuführt, bevor die Auspuffgase seitlich über einen Stutzen abgeführt werden.

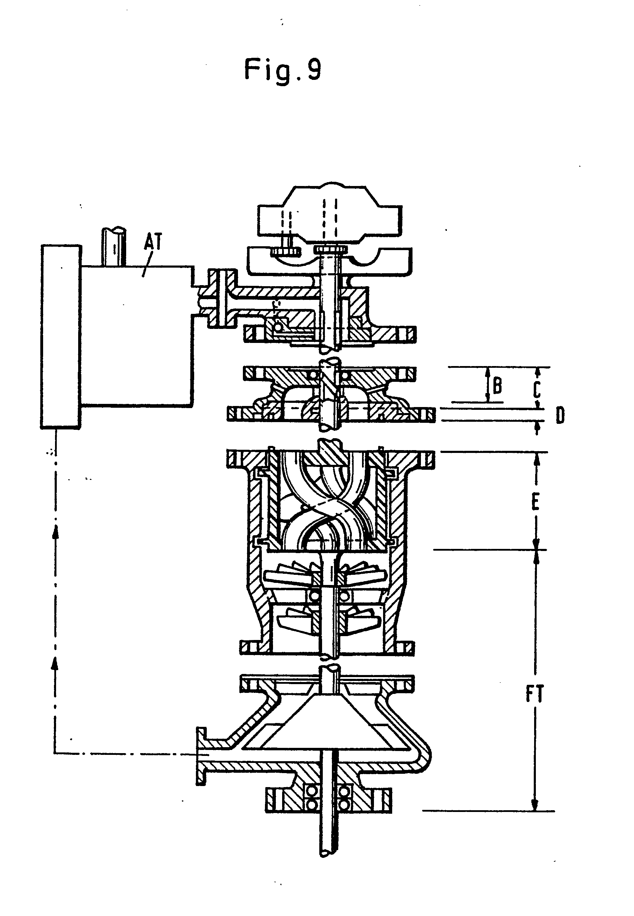

Bei der Ausgestaltung nach Fig. 9 ist die Ladeeinrichtung als von den Auspuffgasen angetriebene Abgasturbine AT ausgebildet. Ausserdem ist anstelle der Abgasschnecke eine Abgasturbine FT vorgesehen, bei der sich der letzte Gehäuseabschnitt konisch erweitert, um einen Abgasrotor in Form eines Abgasturbinenrades aufzunehmen. Dieses Abgasturbinenrad hat einen kegelförmigen festen Kern, der mit dem Gehäuse einen vorzugsweise in Gasabströmrichtung kleiner werdenden Spalt bildet, auf bzw. in dem Turbinenschaufeln kinetische Energie des Abgases in ein Drehmoment umwandeln und der Hauptwelle zuführen.

Unabhängig davon, ob eine Abgasschnecke oder eine Abgasturbine vorgesehen ist, reicht die enthaltene Restenergie immer noch aus, um den gemäss Fig. 9 vorgesehenen Turboverdichter AT zu betreiben. Die Zuleitung der Abgase zum Turboverdichter ist in Fig. 9 mit strichpunktierten Linien wiedergegeben.

Die Beschreibung zeigt, dass der Explosions-Turbinen-Motor keine hin- und hergehenden Teile aufweist, somit absolut rund und ruhig läuft und keine Energie für die Beschleunigung und Abbremsung hin- und hergehender Teile vergeudet.

Es gibt kein Klopfen, so dass Treibstoff nahezu beliebiger Qualität verwendet werden kann. Die Schmierung der Lager rotierender Teile ist von der Führung rotierender, von Brenngasen berührter Flächen absolut getrennt, so dass keine Luftverschmutzung durch verbranntes Schmieröl auftreten kann. Eine grössere Energieausnutzung des Treibstoffes, eine längere Lebensdauer und eine umweltfreundliche Arbeitsweise sind die wesentlichen Vorteile.

**Patentansprüche**

1. Explosions-Turbinen-Motor zum Antreiben von Fahrzeugen, bei dem auf bzw. an einer Hauptwelle in Achsrichtung hintereinander eine Ladeeinrichtung, eine Ladekammer, eine Brennkammer und ein Drehmoment erzeugender Abgasteil vorgesehen sind, wobei die Brennkammer mit der Ladekammer und dem Abgasteil jeweils mittels einer Drehschiebereinrichtung gesteuert verbindbar ist, dadurch gekennzeichnet, dass die auf der Hauptwelle (b) angeordnete Ladeeinrichtung (A, AT) in Form eines Rotations-Saugverdichters ausgebildet ist, dass im Anschluss an die Ladeeinrichtung (A, AT) eine feststehende Ladekammer (B) vorgesehen ist, die eine Drehschieber-Einlasssteuerung (e, g, k) umfasst, welche letztere die Luft- bzw. Kraftstoff-Luft-Gemischzufuhr zu einem feststehenden Zylinderkopf (C) mit mehreren Verbrennungsräumen (l1 bis l4) steuert, dass je Verbrennungsraum (l1 bis l4) wenigstens eine Zündkerze (Z) und an die Verbrennungsräume (l1 bis l4) axial anschliessend eine feststehende Steuerscheibe (D) mit einer der Anzahl der Verbrennungsräume (l1 bis l4) entsprechenden Anzahl von Gasdurchtrittsöffnungen (m1 bis m4) und daran axial anschliessend als Abgasteil ein rohrförmiges, feststehendes Gehäuse mit darin umlaufendem, mit der Hauptwelle (b) verbundenem Drehkolben (E), der vier am Aussenrand eines zylindrischen Mantels in Achsrichtung mit Rechtsdrall um 180° verwundene Brennrohre (p1 bis p4) aufweist, axial daran anschliessend in einem ein- oder mehrteiligen Gehäuse einen Abgas-Arbeitsteil (F, FT) mit wenigstens einem Turbinenlaufrad (s) vorgesehen ist, welches als Abgasrotor mit der Hauptwelle (b) verbunden ist, während am Gehäuse ein Abgasaustrittsstutzen vorgesehen ist, dass die Ladeeinrichtung luft- bzw. gemischeintrittsseitig mit einem Membranventil (d) ausgerüstet ist, und dass die Hauptwelle (b) von der Ladekammerwandung dicht umschlossen ist, zwei vom Luft- oder Gemischaustrittsende der Ladeeinrichtung (A, AT) über die Ladekammer (B) bis in den Zylinderkopf (C), diametral zueinander angeordnete, geradlinig verlaufende Gasübertrittsnute (g) aufweist, die innerhalb der Ladekammer (B) mittels einer Spiralnut (g') der Hauptwelle (b) miteinander verbunden sind, wobei die die Hauptwelle (b) umschliessende Ladekammerwandung eine der Anzahl der Verbrennungsräume (l1 bis l4) entsprechende, zu diesen Verbrennungsräumen (l1 bis l4) durchgehende Einlassöffnungen (k) aufweist, die die Nute (g) der Hauptwelle (b) bei deren Rotation periodisch mit den Verbrennungsräumen (l1 bis l4) verbinden und davon trennen.

2. Explosions-Turbinen-Motor nach Anspruch 1, dadurch gekennzeichnet, dass das Membranventil (d) an der Luft- bzw. Gemischeintrittsseite der Ladeeinrichtung (A, AT) steuerbar ist.

3. Explosions-Turbinen-Motor nach Anspruch 1 oder 2, dadurch gekennzeichnet, dass die Ladeeinrichtung (A) als Ladeschnecke ausgebildet ist, ein in Achsrichtung eiförmiges Gehäuse (a) aufweist, das druckseitig in einen zylindrischen Abschnitt übergeht, dass ein Membranventil (d) saugseitig seitlich am Gehäuse (a) angeordnet ist.

4. Explosions-Turbinen-Motor nach Anspruch 1, dadurch gekennzeichnet, dass die Ladeeinrichtung als Abgas-Ladeverdichter ausgebildet ist.

5. Explosions-Turbinen-Motor nach Anspruch 3, dadurch gekennzeichnet, dass ein Abgas-Ladeverdichter zusätzlich zur Ladeschnecke (A) vorgesehen ist und mit seinem Druckluftausgang mit einer Zentralbohrung (i) der Hauptwelle (b) verbunden ist, und dass die Zentralbohrung (i) bis in den Zylinderkopf (C) reicht und über zwei Querkanäle (e) mit den Nuten (g) verbunden ist.

6. Explosions-Turbinen-Motor nach einem der Ansprüche 1 bis 5, dadurch gekennzeichnet, dass zwischen der Ladeeinrichtung (A, AT) und dem Zylinderkopf (C) sowie der Ladekammer (B) ein Sperring (t) angeordnet ist, der den Druckteil der Ladeeinrichtung (A, AT) gegen den Zylinderkopf (C) und die Ladekammer (B) abdichtet und der eine Öffnung (t1) für den Gasaustritt in die Ladekammer bzw. den Zylinderkopf (C) aufweist, deren Querschnitt mittels eines mechanisch betätigbaren Schiebers (t2) veränderbar ist.

7. Explosions-Turbinen-Motor nach einem der Ansprüche 1 bis 6, dadurch gekennzeichnet, dass die Steuerscheibe (D) an die Gasaustrittsseite des Zylinderkopfes (C) angeflanscht ist, gegen letzteren mittels einer am Aussenumfang angeordneten dichten Passung gegen die Oberseite des rotierenden Drehkolbens (E) mittels einer Dichtungsnut (n) sowie zwischen den Gasdurchtrittsöffnungen (m1 bis m4) mit radial verlaufenden Dichtungen (o) abgedichtet ist und zwecks Gasumkehrspülung beim Laden an zylinderkopfseitigen Oberflächen gegen Drehrichtung verlaufende, nasenförmige, von den Gasdurchtrittsöffnungen ausgehende Aussparungen (m5) aufweisen.

8. Explosions-Turbinen-Motor nach einem der Ansprüche 1 bis 7, dadurch gekennzeichnet, dass der Mantel des Drehkolbens (E) mit einer Umfangsrippe (v1) auf seiner Steuerscheibenseite in die Nut derselben dichtend eingriegt und mit axialem Abstand angeordneten, radial nach aussen vorspringenden Rippen (v2) dichtend in entsprechende Nute (v3) des umgebenden Gehäuses eingreift, dass der Mantel über seinem Umfang verteilte Austrittslöcher (r) für eine Kühlflüssigkeit aufweist, welche aus einer Zentralbohrung (r2) des abtriebsseitigen Endes der Hauptwelle (b) mittels einer Drehkupplung (ra) zuführbar ist, und dass die Brennrohre (p1 bis p4) aus temperaturbeständigem, keramischen Werkstoff bestehen und auswechselbar im Mantel eingesetzt sind.

9. Explosions-Turbinen-Motor nach einem der Ansprüche 1 bis 8, dadurch gekennzeichnet, dass der Abgasteil (f) zwei durch feststehende Umlenkschaufeln axial voneinander getrennte Turbinenlaufräder (s) aufweist.

10. Explosions-Turbinen-Motor nach einem der Ansprüche 1 bis 9, dadurch gekennzeichnet, dass das Gehäuse des Abgasteiles in axialem Anschluss an das oder die Turbinenlaufräder (s) konisch verjüngt ausgebildet ist und eine querschnittsangepasste, auf der Hauptwelle (b) befestigte Schnecke aufnimmt.

11. Explosions-Turbinen-Motor nach einem der Ansprüche 1 bis 9, dadurch gekennzeichnet, dass das Gehäuse des Abgasteiles im Anschluss an den Turbinenteil konisch erweitert ausgebildet ist und einen weiteren Turbinenrotor (FT) mit konisch erweitertem Kern aufnimmt, der mit der Hauptwelle (b) verbunden ist.

12. Explosions-Turbinen-Motor nach einem der Ansprüche 1 bis 11, dadurch gekennzeichnet, dass auf der Hauptwelle (b) eine Strombremse befestigt ist.

**Claims**

1. A turbine-engine for propelling vehicles, comprising a intake unit, a charging chamber, a combustion chamber and an exhaust outlet which produces a rotary motion, axially located along a main shaft, the combustion chamber connected at either end to the charging chamber and the exhaust outlet by means of a rotary slide valve, with the following characteristics: the charging unit (A, AT), connected to the main shaft, consists of a rotary intake compressor, following the charging unit downstream (A, AT), a stationary charging chamber (B) consisting of a rotary slide valve (e, g, k) for the intake of air, or a fuel-air-mixture to a fixed cylinder head (C) consisting of several combustion chambers (I1 to I4), for each combustion chamber (I1 to I4) there is one or more spark-plugs (z) and, following the combustion chambers (I1 to I4) along the axis, a fixed valve plate (D) with several ports for the emission of gas (m1 to m4) corresponding with the number of combustion chambers and, axially aligned therewith as an exhaust unit, a tubular fixed housing containing a rotor piston (E) connected with the main shaft (b) having 4 combustion tubes (p1 to p4) spiralled at an angle of 180° like a screw in the direction of the axis surrounding the edge of a cylindrical case and axially aligned with it, in a housing of one or more sections, an exhaust unit (F, FT) with at least one turbine wheel connected as an exhaust rotor to the main shaft, the housing having an exhaust outlet, the charging unit at the upstream end for the intake of air or the fuel mixture having a membrane valve (d), the charging unit closely fitting the main shaft having two straight grooves (g) for the transmission of gas which run from the downstream end of the charging unit (A, AT) through the charging chamber and into the cylinder head (C) and which are diametrically arranged to and connected with each other inside the charging chamber (B) by means of the spiral groove (g') of the main shaft (b), the surface of the charging chamber surrounding the main shaft (b) contains a number of ports (k) corresponding to the number of combustion chambers (I1 to I4) and opening into these, thus periodically connecting the groove (g) of the main shaft (b) to, or blocking it from, the combustion chambers (I1 to I4).

2. Explosions-turbine-engine according to claim 1, with the membrane valve (d) at the upstream end of the charging unit (A, AT) for the intake of air or the fuel mixture being controllable.

3. Explosions-turbine-engine according to claims 1 and 2, with the charging unit (A) having the form of a coil, with a housing (a) shaped like an egg towards the axis and merging with a cylindrical section for compression and with a membrane valve (d) attached to the upstream side of the housing (a).

4. Explosions-turbine-engine according to claim 1, with the charging unit formed as an exhaust-charger-compressor.

5. Explosions-turbine-engine according to claim 3, with an exhaust-charger-compressor added to the coil (A) and connected to the central bore (i) of the main shaft (b), the central bore passing into the cylinder head (C) and connected by 2 angularly offset grooves (e) to the aforementioned grooves (g).

6. Explosions-turbine-engine according to one of the claims 1 to 5, with a blocking ring (t) located between the charging unit (A, AT) and the cylinder head (C), and the charging chamber (B), sealing off the pressure section of the charging unit (A, AT) against the cylinder head (C) and the charging chamber (B), and having a port (t1) allowing the gas to pass into the charging chamber or the cylinder head (C), and with an aperture mechanically controlled by means of a slide valve (t2).

7. Explosions-turbine-engine according to one of the claims 1 to 6, with a valve plate (D) flanged to the downstream section of the cylinder head (C), sealed from the latter by means of a circular groove at one end engaging with the complementary ridge of the cylinder head and to the upper end of the rotating piston (E) by means of a sealing groove (n) and additionally between the ports (m1 to m4) by means of radially arranged seals (o), and containing nose-like gaps extending from the ports on the surfaces next to the cylinder head and arranged against the rotation movement, to counteract flooding when charging.

8. Explosions-turbine-engine according to one of the claims 1 to 8, with the case of the rotating piston having a circumferential ridge closely engaging with the corresponding groove of the valve plate, in addition to axially spaced and radially projecting ridges (v2) which engage with corresponding grooves (v3) of the surrounding housing, and with ports (r) on its surface for a cooling liquid to be introduced via a central bore (r2) at the downstream end of the main shaft by means of a rotary coupling, and with combustion tubes (p1 to p4), made of a temperature-resistant ceramic material, arranged in the case in such a way as to be readily accessible for replacement.

9. Explosions-turbine-engine according to one of the claims 1 to 8, with the exhaust section (f) containing two turbine wheels (s) separated axially by two fixed deflecting vanes.

10. Explosions-turbine-engine according to claims 1 to 9, with the housing of the exhaust unit axially joining the turbine wheels (s) being conically shaped and containing a correspondingly shaped coil that is fixed to the mainshaft (b).

11. Explosions-turbine-engine according to claims 1 to 9, with the housing of the exhaust unit being conically wider at the point that it connects with the turbine unit and containing an additional turbine rotor (FT) with a correspondingly shaped core which is connected to the main shaft.

12. Explosions-turbine-engine according to claims 1 to 11 having an electric brake connected to the shaft.

## Revendications

1. Turbine à explosions pour actionnement de véhicules, prévoyant sur ou à côté d'un arbre principal en direction de l'axe l'un après l'autre une installation de chargement, une chambre de chargement, une chambre de combustion et un élément d'échappement produisant un couple de rotation, la chambre de combustion étant combinable avec la chambre de chargement et l'élément d'échappement par l'intermédiaire respectif d'une installation de tiroir rotatif, caractérisé par le fait que l'installation de chargement (A, AT) placée sur l'arbre principal (b) est réalisée sous forme d'un compresseur rotatif aspirant, qu'à l'installation de chargement (A, AT) se raccorde une chambre de chargement (B) fixe impliquant une distribution d'admission rotative aspirante (e, g, k) réglant l'alimentation d'air ou du mélange d'air et de carburant d'une tête de cylindre (C) fixe à plusieurs chambres de combustion (l1 à l4), que par chambre de combustion (l1 à l4) est prévue au moins une bougie (Z), et qu'aux chambres de combustion (l1 à l4) se raccorde axialement un disque de commande (D) avec un nombre d'ouvertures d'entrée du gaz (m1 à m4) correspondant au nombre de chambres de combustion (l1 à l4), qu'à cela se raccorde axialement comme élément d'échappement une enveloppe tubulaire fixe dans laquelle tourne, relié à l'arbre principal (b) un piston rotatif (E) muni de quatre tubes de combustion (p1 à p4) tordus au bord extérieur d'une chemise cylindrique en direction de l'axe tournant à droite de 180 degrés, qu'à cela se raccorde axialement, dans une enveloppe consistant d'une ou de plusieurs parties un élément d'échappement de travail à au moins une couronne mobile de turbine (s) relié en tant que rotor l'échappement à l'arbre principal (b), la chemise étant prévue avec une tubulure d'échappement, que l'installation de chargement est munie d'une soupape à diaphragme (d) du côté de l'entrée d'air ou du mélange et que l'arbre principal (b), serré entre les murs de la chambre de chargement, est muni de deux rainures de conduite de gaz (g) diamétrales allant de façon rectiligne de la sortie d'air ou du mélange de l'installation de chargement (A, AT) à la tête de cylindre (C) en passant par la chambre de chargement (B), les rainures (g) étant reliées dans la chambre de chargement (B) à l'aide d'une rainure hélicoïdale (g') de l'arbre principal (b), les murs de la chambre de chargement enfermant l'arbre principal (b) étant munies d'ouvertures (k) vers les chambres de combustions (l1 à l4), ouvertures dont la quantité correspond au nombre de chambres de combustion (l1 à l4) et qui relient ou séparent périodiquement pendant la rotation les rainures (g) de l'arbre principal (b) et les chambres de combustion (l1 à l4).

2. Turbine à explosions d'après la revendication numéro 1, caractérisé par le fait que la soupape à diaphragme (d) peut être commandée du côté de l'entrée d'air ou du mélange de l'installation de chargement (A, AT).

3. Turbine à explosions d'après les revendications numéros 1 ou 2, caractérisé par le fait que l'installation de chargement (A) est réalisée comme vis de charge sans fin et est munie d'une enveloppe (a) ovale en direction de l'axe qui, du côté de refoulement, se termine dans une partie cylindrique et qu'une soupape à diaphragme (d) est placée du côté d'aspiration au bord de l'enveloppe (a).

4. Turbine à explosions d'après la revendication numéro 1, caractérisé par le fait que l'installation de chargement est réalisée comme compresseur à gaz brûlé.

5. Turbine à explosions d'après la revendication numéro 3, caractérisé par le fait qu'outre la vis de charge sans fin (A) un compresseur à gaz brûlé est prévu dont la sortie d'air comprimé est reliée avec une forure centrale (i) de l'arbre principal (b), et que la forure centrale (i) va jusque dans la tête de cylindre (C) et est reliée par deux passages transversaux (e) avec les rainures (g).

6. Turbine à explosions d'après l'une des revendications numéros 1 à 5, caractérisé par le fait qu'entre l'installation de chargement (A, AT) et la tête de cylindre (C) ainsi que la chambre de chargement (B) se trouve un anneau d'arrêt (t) qui obture la partie de pression de l'installation de chargement (A, AT) contre la tête de cylindre (C) et la chambre de chargement (B) et qui est muni d'une ouverture (t1) pour la conduite du gaz dans la chambre de chargement ou la tête de cylindre (C), ouverture dont la section transversale est réglable à l'aide d'une coulisse (t2) mécaniquement manoeuvrable.

7. Turbine à explosions d'après l'une des revendications numéros 1 à 6, caractérisé par le fait que le disque de manoeuvre (D) est bridé au côté de la sortie du gaz de la tête de cylindre (C) et obturé contre celle-ci par un ajustement hermétique disposé au pourtour, contre la partie supérieure du piston rotatif tournant (E) par une rainure pour la garniture (n) ainsi qu'entre les ouvertures de passage du gaz (m1 à m4) par des garnitures radiales (o) et qu'il présente des évidements sous forme de nez partant des ouvertures de passage du gaz et allant contre le sens de rotation pour balayage du gaz par renversement lors du chargement aux surfaces des côtés de la tête de cylindre.

8. Turbine à explosions d'après l'une des revendications numéros 1 à 7, caractérisé par le fait que la chemise du piston rotatif (E) s'engrène de façon obturante avec une nervure périphérique (v1) du côté de son disque de manoeuvre dans la rainure de celui-ci ainsi qu'avec des nervures (v2) saillant radialement vers l'extérieur dans des rainures correspondantes (v3) du carter entourant, que l'enveloppe présente des orifices de sortie (r) sur son pourtour destinés à un liquide de refroidissement qui est alimenté à partir d'une forure centrale (r2) du côté entraînement de l'arbre principal à l'aide d'un accouplement tourneur (ra), et que les tubes de combustion (p1 à p4) consistent en matériel céramique à constance thermique et sont introduits dans l'enveloppe de façon échangeable.

9. Turbine à explosions d'après l'une des revendications numéros 1 à 8, caractérisé par le fait que l'élément d'échappement (f) présente deux couronnes mobiles de turbine (s) séparées axialement par des aubes de renvoi fixes.

10. Turbine à explosions d'après l'une des revendications numéros 1 à 9, caractérisé par le fait que l'enveloppe de l'élément d'échappement se réduit de façon conique en raccord axial à la ou les couronnes mobiles de turbine (s) et recueille une vis sans fin adaptée dans sa coupe transversale et fixée sur l'arbre principal (b).

11. Turbine à explosions d'après l'une des revendications numéros 1 à 9, caractérisé par le fait que l'enveloppe de l'élément d'échappement s'élargit de façon conique après l'élément de turbine et recueille un autre disque de turbine (FT) à coeur élargi de façon conique qui est relié à l'arbre principal (b).

12. Turbine à explosions d'après l'une des revendications numéros 1 à 11, caractérisé par le fait qu'un frein à production de courant est fixé sur l'arbre principal.

0154205

Fig. 1

Fig. 2

0154205

# Fig. 3

(A-B)

13

0154205

Fig.4

(C-D)

0154205

Fig.5

(E-F)

B

n

m

m

m

b

m

m

n

F

E

A

n

n

o

o

17

0154205

Fig.6

(G-H)

19

# Fig.7

# Fig. 8

0154205

Fig.9

25